# EUROPEAN PATENT APPLICATION

(11) **EP 1 090 796 A2**
(43) Date of publication of application: **11.04.2001**
(21) Application number: 00121740.5
(22) Date of filing: 05.10.2000
(51) Int. Cl.: B60K 15/05

(54) **Fuel tank inlet cover for a motor vehicle**

(30) Priority: 08.10.1999 IT TO990869
(71) Applicant: Zanini, Paolo, 28040 Oleggio Castello (Novara) (IT)
(72) Inventor: Zanini, Paolo, 28040 Oleggio Castello (Novara) (IT)
(74) Representative: Gerbino, Angelo

(57) **Abstract**

The device includes a pair of cylindrical tubular elements (20, 22) coupled telescopically and for relative rotation. One element is secured to the bottom wall (26) of a recess (12) housing a fuel filler (14). The other tubular element (22) is fixed to a cover (18). Means for moving the cover (18) are associated with the telescopic assembly of tubular elements (20, 22). One tubular element has a cam track with a rectilinear longitudinal portion and a helical portion. The other tubular element has a cam follower engaged with the cam track. The arrangement is such that, when the cover (18) is moving from its closed to its open position, cooperation of the cam follower with the cam track first causes the cover to move away from the plane of the body panel (10) and in a second stage gives the cover (18) a helical motion taking it into an open position in which the fuel filler (14) is accessible.

## Description

The present invention relates to a device for closing a recess formed in a panel of the body of a motor vehicle and housing a fuel filler, the device including a cover movable between a position in which it closes the recess and completes the surface of the body panel and an open position in which it leaves the filler uncovered, means for moving the cover and means for locking the cover into the closed position which can be controlled to disengage and allow the movement means to move the cover into the open position.

Numerous devices of this type are known in the art, in which the movable cover is hinged at one side of the recess, usually to the front side with regard to the forward movement of the vehicle.

When the cover is unlocked it snaps into a "flag" position, at substantially 90° to the body panel.

In this position, the cover is vulnerable and, for example, could be damaged by body pressure should the person filling the tank be clumsy, which could be possible if, rather than a pump operator, this person was a driver unused to operating self-service pumps.

Devices with a hinged cover which opens at 90° when unlocked are relatively complicated, including a relatively large number of parts which are relatively difficult to assemble.

One object of the invention is to provide a closure device of the type under consideration which does not have the disadvantage of a cover opening at 90° and is of a simple and economical construction, being made up of a few easily assembled parts.

This object is achieved according to the invention by providing a device having the characteristics claimed in Claim 1.

The arrangement of the invention makes it possible to provide a device with a cover which in its open position lies "flat" next to the recess, just spaced from the body and thus not vulnerable to damage.

This arrangement also makes it possible to provide a device composed of only three principal parts: a first part can be constituted by a fixed tubular element and by the means for fixing it to the recess; a second part can be constituted by a movable tubular element and a cover; the third part is a movement member which, in its most simple embodiment, can be constituted by a coil spring.

The part of the device of the invention which includes the movable tubular element can be painted at the same time as the body of the vehicle but before it is fixed thereto: in this event, the movable element should simply be masked with a suitable re-usable plug or other cover, to prevent the paint from being sprayed onto the surface to be coupled with the fixed tubular element.

The other part of the device of the invention, which comprises the fixed tubular element, is not painted and is fitted once the bodywork has been sprayed.

The fixed tubular element can have a bracket for fixing to the panel inside the recess, by bolts for example.

In a preferred embodiment, the bracket can be formed by a cap-shaped fixing plate defining both the bottom and the side walls of the recess.

In this case, the fixing plate can be snap-engaged with the body of the vehicle.

In order to assemble the device, the fixed tubular element is first fixed into position on the body by its fixing means.

The movement means, constituted for example by a spring, are then inserted into the fixed tubular element, after which the movable tubular element, complete with its painted cover, is engaged with the latter.

A cam follower engaged in the slot also holds the two tubular elements together.

This can be a threaded pin screwed into a slot in the associated tubular element.

Preferably, however, the cam follower is a tooth carried by a resilient strip, formed in one piece with the associated tubular element or securely fixed thereto, tending resiliently to hold the tooth engaged with the slot and operable, during the assembly of the device, to allow the tooth to snap engage the slot when the two tubular elements are telescopically engaged.

In this case, it is most convenient to complete assembly by pushing the cover against the spring, after having engaged the two tubular elements one within the other, until the cam follower snap-engages in the slot.

The invention will be better understood by reading the detailed description which follows, provided with reference to the appended drawings which illustrate a preferred embodiment thereof, purely by way of non-limitative example and in which:
Figure 1 is a perspective view of a portion of a panel of the body of a vehicle and of a movable cover of a device of the invention in its closed position,
Figure 2 is a similar perspective view but with the cover in its open position,
Figure 3 is a cross section taken through the plane III-III of Figure 1,
Figure 4 is a similar cross section, taken through the plane indicated V-V of Figure 2,
Figure 5 is a partially cut-away exploded perspective view of the device,
Figure 6 is a partial section, similar to that of Figures 3 and 4 but on a larger scale, illustrating the way the movable tubular element and the fixed tubular element making up the device are fitted together, and
Figure 7 is a partial cross section, on an enlarged scale, taken through the plane indicated VII-VII of Figure 3.

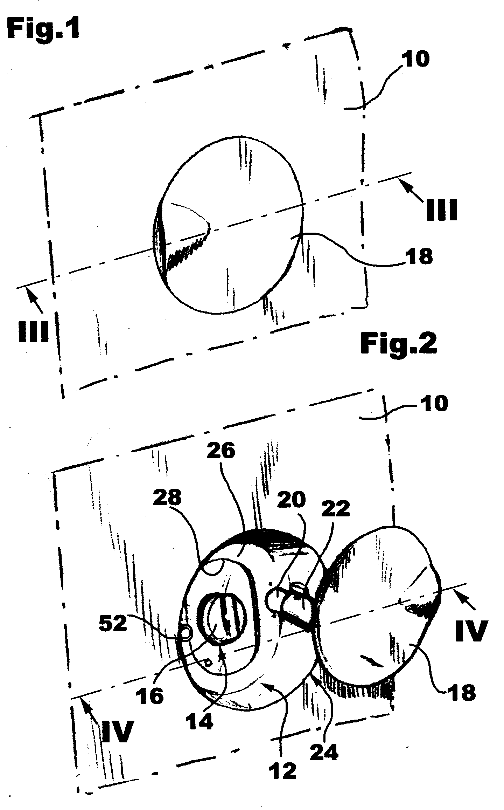

With reference first to Figures 1 to 4, a vehicle body panel is indicated 10, with a recess 12 formed therein.

A fuel filler 14 with a cap 16 is housed in the bottom of the recess.

A cover 18 is associated with the recess 12.

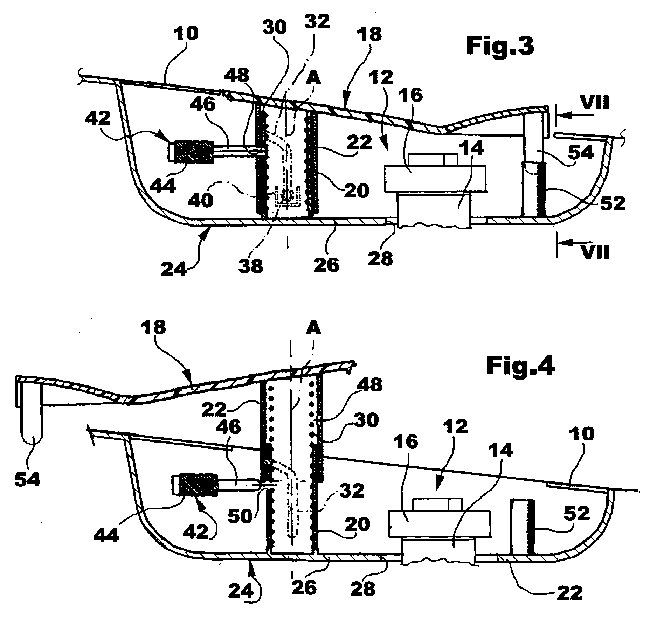

The cover 18 is movable between a closed position (Figures 1 and 3) in which it covers the recess 12 and completes the surface of the panel 10, and an open position in which it leaves the fuel filler 14 uncovered.

As can be seen in Figures 2 and 4, when it is in its open position, the cover 18 lies substantially parallel with the panel 10, and slightly spaced therefrom.

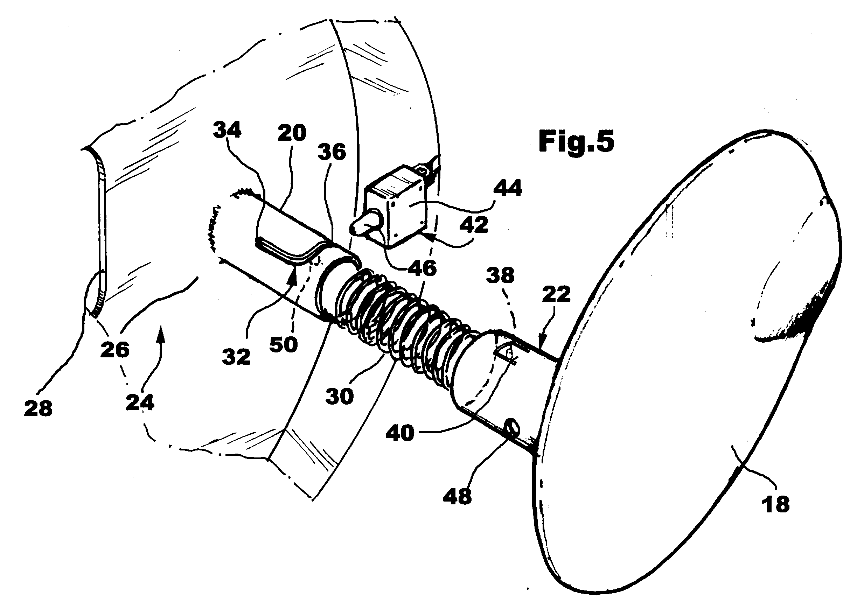

The elements of the device, and the function of each, will now be described with reference to Figures 3 to 5.

The device includes a pair of cylindrical tubular elements, a fixed element 20 and a movable element 22, fitted together telescopically and for relative rotation.

The fixed element 20 is secured to the bottom wall of the recess 12, while the movable element 22 is secured to the cover 18.

As can be seen from Figures 3 and 4 in particular, the two elements 20, 22 are arranged along an eccentric axis A with regard both to the recess 12 and to the cover 18.

In a preferred embodiment, the fixed tubular element 20 is moulded in one piece of plastics material, with a base plate 24 fitted inside the recess 12. A base 26 of the plate 24 acts as bracket and is fixed to a structural element of the vehicle body, with the fuel filler 14 protruding through an aperture 28.

In an alternative embodiment, not shown, the fixed tubular element could be moulded in one piece from plastics material with a bracket or fixing plate for securing it to the bottom of the recess 12 which forms part of the bodywork.

The movable tubular element 22 is preferably moulded of plastics material in one piece with the cover 18.

Means for moving the cover 18, in the form of a compression coil spring 30 acting as a resilient member for urging the cover 18 into the open position of Figures 2 and 4, are housed inside the telescopically coupled tubular elements 20, 22.

The fixed tubular element 20 is preferably, though not necessarily, the inner element of the pair, with the movable element 22 being the outer one.

The cam track 32 of the fixed tubular element 20 has a rectilinear longitudinal portion 34 and a helical portion 36.

More conveniently, the cam track 32 is constituted by a slot in the wall of the innermost element 20 of the telescopically assembled pair.

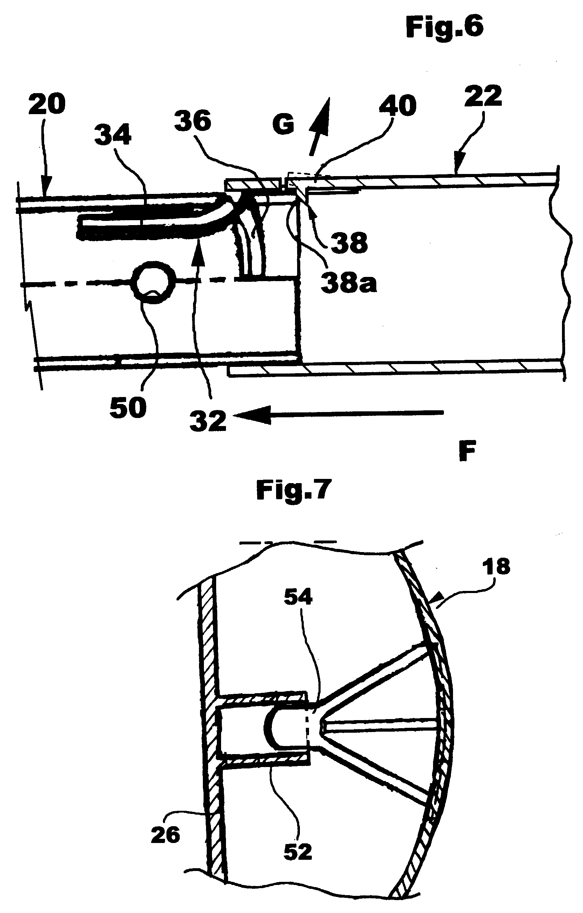

The movable element 22 has a cam follower 38 in the form of a tooth, seen more clearly in Figure 6.

The cam follower tooth 38 is preferably carried by a resilient strip 40 integrally formed with the tubular element 22 (or fixed thereto).

The cam follower tooth 38 preferably also has a bevel 38a facing the end of the movable tubular element 22 furthest from the cover.

The function of this bevelled edge 38a will be explained later.

The strip 40 tends resiliently to maintain the tooth 38 engaged with the slot 32.

Figure 6, from which the spring 30 has been omitted for the sake of clarity, illustrates an assembly step during which the movable tubular element 22 has just been fitted over the fixed element 20, in the direction of the arrow F, and the bevelled edge 38a engages the edge of the mouth of the fixed tubular element 20.

At this point, the technician need only put pressure on the cover 18 for the cam action between the edge of the mouth and the bevelled edge 38a to lift the resilient strip 40 in the direction of the arrow G into the position indicated by a chain line, until the tooth 38 no longer projects into the element 22.

The tooth 38 then reaches the peripheral wall of the fixed tubular element 20. While continuing the coupling operation in the direction of the arrow F, the tooth 38 slides along the peripheral wall until it locates any point of the slot 32 and snap-engages therein, after which the two elements 20 and 22 are permanently coupled.

Should it be necessary for any reason to remove the cover 18 and its tubular element 22 from the vehicle body, it is only necessary to disengage the tooth 38 from the slot 32 by raising the strip 40 in the direction of the arrow G of Figure 6 using a suitable tool, a screwdriver for example.

The tooth 38 need not have the bevelled edge: in this case the technician fitting the device will deform the strip 40 with a tool.

The device of the invention includes means for locking the cover 18 into the closed position of Figures 1 and 3.

These locking means preferably include an electromagnetic lock 42 (see Figures 3 to 5) with a body 44 fixed in the recess, for example to a peripheral wall of the cup-shaped fixing plate 24, if there is one, or to a peripheral wall of the recess 12 itself.

The electromagnetic lock 42 includes a movable core 46 acting as a bolt.

Meanwhile, the movable element 22 has an opening 48 aligned with the bolt 46 in the closed position of Figures 1 and 3.

The bolt 46 is resiliently urged into a rest position in which its end outside the body 44 is inserted into or insertable into the opening 48 thus preventing the element 22 and the cover 18 from being returned by the action of the spring 30.

In order better to ensure that the device is locked into the closed position, the inner tubular element 20 also has a corresponding hole, indicated 50 in Figure 4, which is permanently aligned with the bolt 46 and through which the latter also passes when the cover is closed.

The cover 18 can be unlocked by remote control: to this end, the electromagnetic lock 42 is electrically connected to a remote control switch arranged, for example, on the dashboard within the driver's reach. By pressing this button, the driver causes the bolt 46 to disengage from the hole 48 (and from the hole 50 if there is one) so that the movable tubular element 22 is free to move.

In a first stage of this movement, the tooth 38 moves along the rectilinear portion 34 of the cam track 32, thereby moving the cover 18 away from the plane of the body panel 10.

In a second stage, the cam follower 38 cooperates with the helical portion 36 of the cam track guiding the cover 18 in a helical movement under the action of the spring 30, until the cover reaches the open position of Figures 2 and 4, in which the fuel filler 14 is accessible.

As illustrated in Figures 2 and 4, the length of the helical portion 36 of the cam track 32 is preferably such that the cover 18 is rotated substantially through 180°.

In order to close the cover 18 again, one need only push it, overcoming the resistance of the spring 30, to start the opposite sequence of movement to that described.

Since, in the meantime, the electrical button controlling the lock 44 will have been released, the bolt 46 once again presses against the tubular element 22.

Once the telescopically engaged assembly is fully retracted, the hole 48 is opposite the bolt 46 which engages it, thereby locking the cover 18 into the closed position of Figures 1 and 3.

In an alternative embodiment, the electromagnetic lock 42 could be replaced by a mechanical lock and the associated bolt could be operated by a control linkage assembly.

Reference is now made to Figure 7 in particular in order to describe a positioning system which ensures that the cover 18 is correctly centred when closed as in Figures 1 and 3.

A positioning or guide member, shown by way of example in Figure 7, and also in Figures 2 to 4, as a tubular spigot 52, is formed at a distance from the telescopic assembly 20-22, protruding from the base 26 of the fixing plate 24 (or from the base of the recess 12).

Meanwhile, the cover 18 has on its inner face a pin 54 positioned so as to engage the tubular spigot 52 when the cover is closed.

When, while returning into the closed position, the cover 18 is guided in a linear movement by the rectilinear portion 34 of the slot 32, the pin 54 engages the spigot 52 thereby securely positioning the cover 18.

At the same time, the bolt 46 engages the hole 48 and the cover 18 is locked.

Naturally, the principle of the invention remaining the same, embodiments and manufacturing details may be varied widely without departing thereby from the scope of the invention. In particular, the spring 30 could be replaced by other means for moving the cover 18, such as an electrical, pneumatic or hydraulic actuator member, for example, operable to control the extension and contraction of the tubular elements in relation to each other. In such a case, the operation to open and close the cover 18 could be made fully automatic.

## Claims

1. A device for closing a recess (12) formed in a panel (10) of the body of a motor vehicle and housing a fuel filler (14), including a cover (18) movable between a closed position in which it covers the recess (12) and completes the surface of the panel (10) and an open position in which the fuel filler (14) is accessible, means for moving the cover (18) and means (44) for locking the cover (18) into the closed position which can be released by remote control so as to allow the movement means to move the cover (18) into the open position,
characterised in that it includes a pair of cylindrical tubular elements (20, 22), coupled both telescopically and for relative rotation, with one fixed to a bottom wall (26) of the recess (12) and the other secured to the cover, and arranged along an eccentric axis (A) with regard both to the recess (12) and to the cover (18), one of the tubular elements (20) having a cam track (32) with a rectilinear longitudinal portion (34) and a helical portion (36), and the other tubular element (22) having a cam follower (38) engaged with the cam track (32) in such a way that, when the movement means move the cover (18) from the closed to the open position, in a first stage, cooperation of the cam follower (38) with the rectilinear portion (34) of the cam track (32) causes the cover to move away from the plane of the panel while, in a second stage, cooperation of the cam follower (38) with the helical portion (36) of the cam track (32) imparts a helical motion to the cover (18) to an open position in which the fuel filler (14) is accessible, the cover (18) being returned to the closed position in an opposite sequence.

2. A device according to Claim 1, characterised in that the said movement means are constituted by a compression coil spring (30) arranged between the telescopically engaged tubular elements (20, 22).

3. A device according to Claim 1, characterised in that the said movement means are constituted by an actuator member, operable to control the extension and retraction respectively of the tubular elements (20, 22) in relation to each other.

4. A device according to any one of the preceding Claims, characterised in that the extension of the helical section (36) of the cam track (32) is such that the cover (18) is rotated substantially through 180°.

5. A device according to any preceding Claim, characterised in that the cam track is constituted by a slot (32) formed in the wall of the inner tubular element (20) of the telescopically engaged pair and the cam follower is constituted by a pin (38) secured to the outer tubular element (22) of the pair and slidably engaged in the slot (32).

6. A device according to Claim 5, characterised in that the cam follower pin (38) is carried by a resilient strip (40) formed in one piece with the associated tubular element (22) or fixed thereto, which tends to keep the pin (38) resiliently engaged with the slot (32) and which, during assembly of the device, enables the pin (38) to snap engage the slot (32) when the two tubular elements (20, 22) are telescopically coupled.

7. A device according to Claim 6, characterised in that the pin (38) has a bevel (38a) for cam-like cooperation with the edge of the mouth of the fixed tubular element (20) so as to deform the strip (40) and enable the pin (38) to reach the peripheral wall of the fixed tubular element (20).

8. A device according to any preceding Claim, characterised in that the inner element (20) of the pair of telescopically coupled elements is fixed to the bottom wall (26) of the recess (12) and the outer element (22) of the pair is fixed to the cover (18).

9. A device according to any preceding Claim, characterised in that the locking means includes a remotely controllable bolt (46) on the one hand and a hole (48) formed in the movable tubular element (22) on the other, this hole being positioned so as to engage the bolt (46) when the telescopic assembly of the two tubular elements (20, 22) is retracted and the cover (18) is in the closed position.

10. A device according to Claim 9, characterised in that the fixed tubular element (20) also has a hole (50) which is permanently aligned with the bolt (46) so as to engage it when the cover (18) is closed.

11. A device according to Claim 9 or Claim 10, characterised in that the locking means include an electromagnetic lock (42) with a body (44) fixed in the recess (12) and a movable core acting as bolt (46) which is resiliently urged into a rest position in which the end outside the body (44) is inserted or insertable into the hole (48) in the movable tubular element (22), this electromagnetic lock (42) being electrically connected to a remote control switch operable, when closed, to disengage the bolt (46) from the said hole (48).

12. A device according to any preceding Claim, characterised in that it includes two parts moulded from plastics material, one comprising the fixed tubular element (20) and a bracket (24) for fixing it to the body of the vehicle, and the other comprising the movable tubular element (22) and the cover (18).

13. A device according to Claim 12, characterised in that the fixing bracket is formed by a cup-shaped fixing plate (24) which defines both the bottom (26) and peripheral walls of the recess (12).

14. A device according to Claim 12, characterised in that the fixing bracket is formed by a plate with means for fixing it to the bottom wall of a recess (12) forming part of a panel (10) of the body of the vehicle.

15. A device according to any preceding Claim, characterised in that the cover (18) and the bracket (24) have respective positioning members (52, 54) for coupling during the linear movement of the cover (18) back into its closed position.
